# EUROPEAN PATENT APPLICATION

(11) **EP 3 031 573 A1**
(43) Date of publication of application: **15.06.2016**
(21) Application number: 15197157.9
(22) Date of filing: 30.11.2015
(51) Int. Cl.: B23Q 5/58

(54) **SAFETY LOCK FOR LATHE CHUCK KEY**

(30) Priority: 08.12.2014 US 201462088830 P; 19.11.2015 US 201514946375
(71) Applicant: JPW Industries Inc., La Vergne, TN 37086-4184 (US)
(72) Inventor: COLEMAN, Micah A., Nashville, TN Tennessee 37205 (US); GARDNER, Martin, Franklin, TN Tennessee 37067 (US); WEBER, Charles, Onalaska, WI Wisconsin 54650 (US)
(74) Representative: Lawrence, John

(57) **Abstract**

A lathe or other rotating machine (10) includes a chuck (14) for holding a work piece or tool. The chuck (14) is operated between engaging and disengaging positions by rotating a chuck key (26) that has been inserted into a key receiving opening (34) in the chuck (14). A chuck key docking station (24,36,50) on the machine (10) includes a sensor (54) to sense the presence or absence of the chuck key (26) at the docking station (24,36,50). The sensor (54) is connected to prevent operation of the machine (10) at speed if the chuck key (26) is not sensed in the chuck key docking station (26,36,50).

## Description

### CROSS-REFERENCE TO RELATED APPLICATION

This application claims the benefit of United States Provisional Patent Application Serial No. 62/088,830, filed December 8, 2014, which is incorporated herein by reference.

### BACKGROUND

### Field

The present invention relates generally to a lathe or other rotating machine, and more particularly to a holder for a chuck key of a lathe or other rotating machine.

### Description of the Related Art

A lathe holds a work piece from one or both ends as the work piece is rotated at relatively high speed. Tools such as cutting and shaping tools are moved into contact with the rotating work piece to shape the work piece. A lathe is commonly used to form spindles, table legs, chair legs, and other rotationally formed portions, which are held from both ends. A lathe may also be used to form bowls or the like by mounting the work piece so that it is held at a single end.

Lathes may be used to shape wood, metal, or other materials. The work piece materials are supported by a chuck that is connected to a motor which operates to rotate the chuck and the work piece, typically at high speed. The work piece is engaged in the chuck by adjusting the chuck to engage the work piece so that the work piece may be shaped, and the work piece is released from the chuck by adjusting the chuck so that the shaped work piece is disengaged and may be removed from the lathe. The chuck typically includes grasping elements that move toward and away from one another symmetrically about the rotational center of the chuck. The grasping elements may be moved using a tool referred to as a chuck key. The chuck key is inserted into a key receiving opening on the chuck and is rotated to operate gear mechanisms within the chuck that move the grasping elements. The chuck key is to be removed from the key receiving opening in the chuck prior to operating the motor that rotates the chuck. In addition to lathes, drills, drill presses, routers, cutting, sanding and shaping tools, powered screw drivers and wrenches and other tools may have chucks and may utilize a chuck key to operate grasping elements in the chuck. In drills, drill presses, and the like, the chuck is operable to hold a tool, such as a drill bit.

### SUMMARY OF THE INVENTION

Certain embodiments of the present invention provide a holder for a chuck key that receives and supports the chuck key of a rotating machine such as a lathe, drill, drill press or other machine. The chuck key holder includes a sensor or other means that determines whether the chuck key is present in the chuck key holder. The sensor or other means is connected to control the operation of the motor that rotates the chuck. The motor is prevented from operating unless the sensor or other means determines that the chuck key is present in the chuck key holder. The presence of the chuck key in the chuck key holder ensures that the chuck key is not inadvertently left in the key receiving opening in the chuck when the motor is started.

The chuck key holder may be provided on the housing or other structure of the lathe or other machine, or may be remote from the machine.

The chuck key holder is preferably positioned on a housing of the machine at a convenient location for the user to permit the user to easily remove the chuck key from the holder for use to adjust the chuck and to easily return the chuck key to the chuck key holder following use. The chuck key holder is shaped to hold the chuck key. In certain embodiments, the chuck key holder is shaped with a receiving recess corresponding to the shape of portions of the chuck key so that the chuck key is readily positioned in the holder but other tools or parts may not be placed into the chuck key holder.

### BRIEF DESCRIPTION OF THE DRAWINGS

**Figure 1** is a perspective view of a lathe according to the principles of the present invention;
**Figure 2** is a perspective view of a chuck of a lathe similar to the lathe shown in Figure 1;
**Figure 3** is a perspective view of the chuck of Figure 2, shown removed from the lathe;
**Figure 4** is a perspective view of a portion of the housing of the lathe of Figure 1 showing a chuck key docking station;
**Figure 5** is an enlarged perspective view of another embodiment of a chuck key docking station; and
**Figure 6** is a schematic representation of a operational interlock and sensor of a chuck key docking station.

### DETAILED DESCRIPTION OF THE PREFERRED EMBODIMENTS

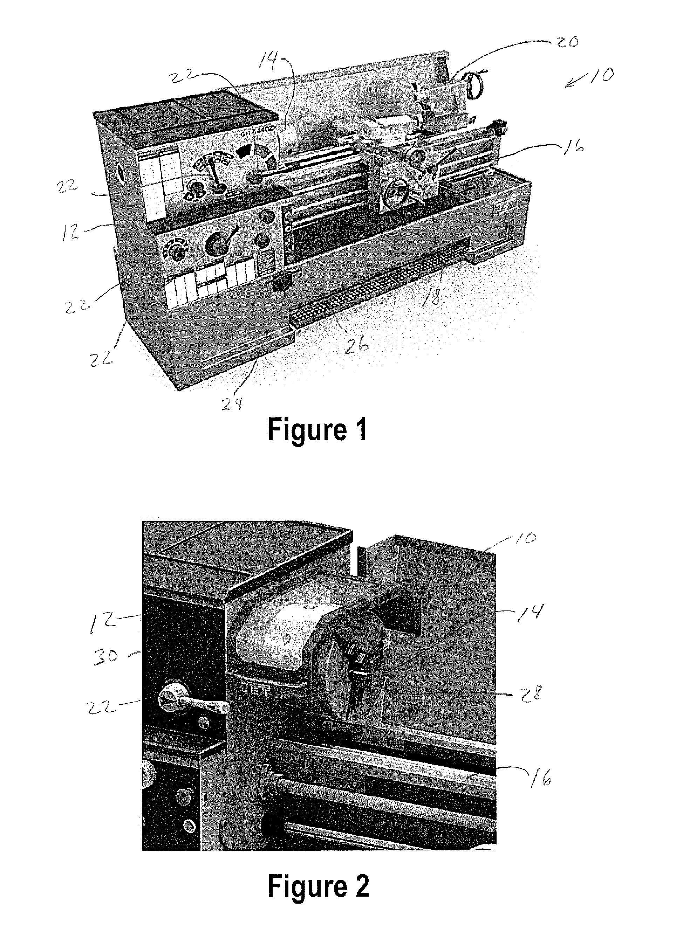

In Figure 1, a lathe 10 includes a housing 12 within which is mounted a motor (not shown) that drives a chuck or headstock 14 that holds a work piece. The lathe 10 includes a bed 16 on which is mounted a carriage 18 and at the end of which is mounted a tailstock 20. Controls 22 for the operation of the lathe 10 are provided on the housing 12. A docking station 24 for holding a chuck key 26 is provided on the housing 12. In the illustrated embodiment, the docking station 24 is provided on the front of the housing 12 near the controls 22. The illustrated lathe 10 is configured for shaping metal work pieces. The present invention is applicable to lathes for shaping metal, wood, plastic or other materials. The present invention may also be used with drill presses, drills, routers, or other machines that utilize a chuck key or other tool to operate a work piece holder or tool holder.

With reference to Figure 2, the chuck 14 extends from the housing 12 and is driven by the motor to rotate so that a work piece or tool held in the chuck 14 rotates as well. The chuck 14 of the illustrated embodiment is also referred to as a scroll chuck and includes three self-centering jaws or dogs 28 that engage the work piece. Chucks with other numbers of jaws are possible and are within the scope of the present invention. The illustrated lathe 10 includes a chuck guard 30 over the chuck 14.

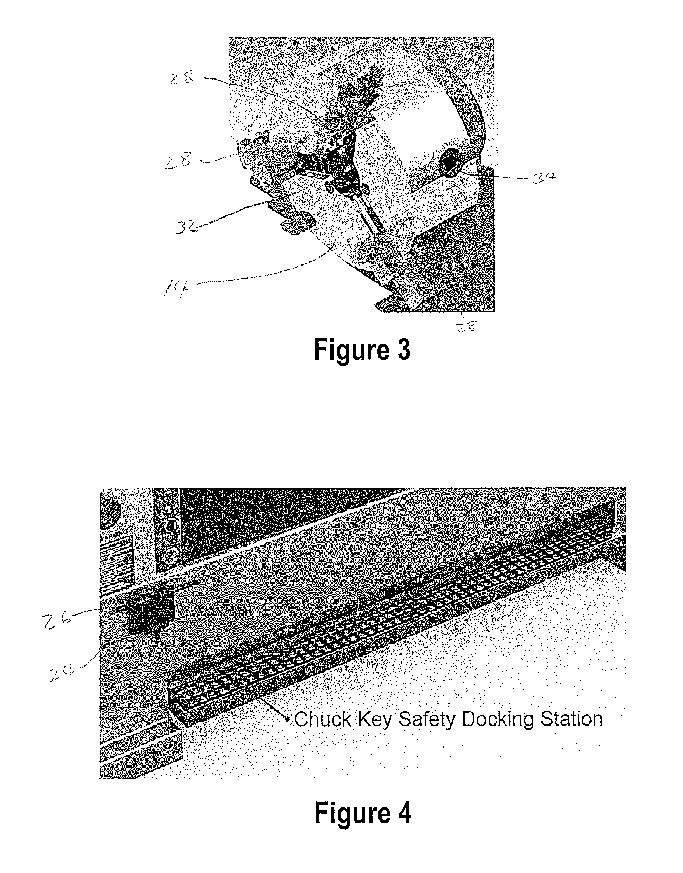

Turning to Figure 3, the chuck 14 includes the three jaws 28 that are connected to a scroll gear 32 within the chuck 14. Rotation of the scroll gear 32 moves all of the jaws 28 at the same time to provide self-centering of items held in the jaws 28. The scroll gear 32 is operated via a key receiving opening 34 in the chuck 14. The chuck key 26 is inserted into the key receiving opening 34 and the key is rotated, which results in movement of the jaws 28 either toward one another or away from one another depending on the direction of the key rotation. The chuck key 26 must be inserted into the key receiving opening during mounting of a work piece or tool in the chuck 14 to adjust the chuck 14 so that the work piece or tool is held tight in the chuck 14 and ensure that the work piece or tool is secured during operation of the lathe or other machine. The chuck key 26 must be removed from the chuck 14 by the user prior to operation of the lathe or other machine, however.

Similarly, removal of the work piece or tool from the chuck 14 is accomplished by inserting the chuck key into the key receiving opening 34 and rotating the key 26 in a direction to move the jaws 28 to an open or disengaging position so that the work piece or tool may be removed from the chuck 14. After the work piece or tool is removed the chuck key 26 must also be removed from the chuck 14 prior to operating the lathe or other machine.

As is apparent in Figure 3, the chuck 14 is large enough that the chuck key 26 may be hidden from view if the chuck 14 is rotated to certain positions. For example, the chuck key 26 may be behind the chuck 14 or the work piece. The user may not see the chuck key 26 in the key receiving opening 34 even if the user is looking at the chuck 14. It is important that the chuck key 26 be removed from the chuck 14.

In Figure 4, the chuck key 26 is mounted in the chuck key docking station 24 on the front wall of the housing 12. The docking station 24 may be mounted or otherwise provided at any location on, near, or remote from the lathe or other machine. The docking station may be incorporated into the lathe or other machine. The operation of the drive motor of the lathe 10 or other machine is enabled while the chuck key 26 is in the docking station 24. The presence of the chuck key 26 in the docking station reduces the risk that the chuck key 26 will be left in the chuck and possibly come loose from the key receiving opening 34 of the chuck 14 during machine operation, possibly being flung from the chuck 14 as the chuck 14 is rotated. If the chuck key 26 is in the chuck 14 and the lathe or machine is operated at speed, the chuck key 26 may come loose and become lost or may strike the lathe or other objects.

In certain embodiments, it is desirable to ensure that the chuck key 26 is located in or at the docking station 24 prior to operation of the lathe or other machine. The docking station 24 may be provided with a sensor or other means to detect the presence of the chuck key 26 in the docking station. According to certain embodiments, the sensor or other key detecting means enables the lathe or other machine to be operated when the chuck key 26 is detected in or at the docking station 24. In particular, the drive motor may only be operated when the key is detected in the docking station, in certain embodiments. The absence of the chuck key 26 from the docking station 24 inhibits the operation of the drive motor, although other functions of the lathe or other machine may be enabled. The sensor or other key detecting means is connected to prevent the chuck 14 from being driven at the operating speed of the lathe or other machine when the chuck key 26 is not detected in or at the docking station 24. This may be accomplished, for example by locking the chuck from rotational movement, disabling a drive linkage or transmission from the motor to the chuck, or by inhibiting the operation of the drive motor of the lathe or other tool if the chuck key 26 is absent from the docking station 24. Other ways to enable and disable the operation of the chuck at operating speed may be used as well. It may be desirable to permit rotation of the chuck as less than operating speed when the key is not at the docking station, such as when the user manually rotates the chuck and work piece to check seating of the work piece in the chuck during mounting of the work piece.

The chuck key 26 of the illustrated embodiment has a T configuration with a tool or key end at the base of the T shape and handles forming a cross-bar of the T shape. The portion of the T-shaped chuck key that is connected to the cross-bar may be referred to as a vertical bar in the present specification, although the vertical bar need not be in a vertical orientation. The chuck key docking station has an opening that is shaped to accept the vertical bar of the T-shaped key. Other configurations of chuck keys and chuck key docking stations may be provided within the scope of this invention. Other tools for operating the chuck, such as wrenches, Allen keys, screw drivers, or the like may be provided instead of the T-shaped chuck key. It is within the scope of the present invention that the key docking station may be configured to receive and sense the presence of the wrench, key, screwdriver, or other tool used to adjust the chuck so that the operation of the chuck drive motor is prevented unless the wrench, key, screwdriver or other tool is in or at the docking station.

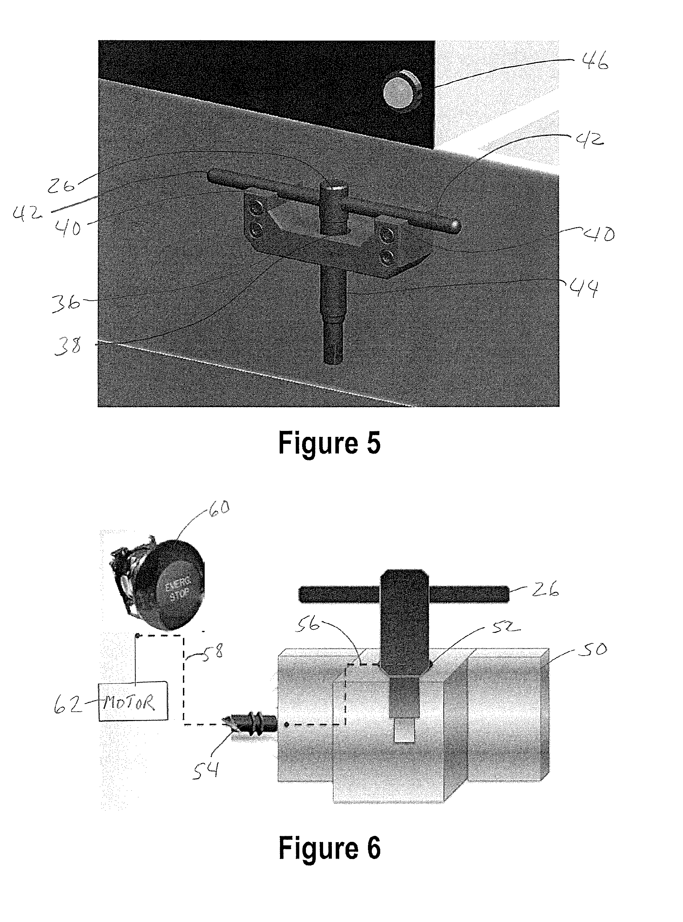

Figure 5 shows a key docking station 36 mounted to the housing 12 and defining an opening 38 for receiving a portion of the chuck key 26. Side portions 40 of the docking station 36 provide a support for the handles 42 of the key 26, while the body 44 of the key 26 is in a predetermined position in the opening 38. A sensor is mounted in the docking station 36 to sense the presence of the chuck key 26. For example, a sensor may be mounted at the opening to sense body 44 of the chuck key 26. The sensor may be an optical sensor mounted so that the chuck key interrupts a beam of light, a magnetic sensor that senses a magnetic element in the chuck key, capacitive sensor that senses a change in capacitance of a circuit element as a result of the presence of the chuck key, a physical sensor such as a lever or button, electrical contacts that are connected by the presence of the key or that are interrupted by the presence of the key, a wireless transmitter and receiver such as provided in modern automobile keys, or any other type of sensor or presence detecting means. Any sensor or detector for detecting the key or wrench is possible and within the scope of this patent.

In Figure 5 is shown an indicator light 46 that indicates whether the sensor detects the presence of the chuck key or not. For example, the indicator light may illuminate to indicate the presence of the key in the docking station. Alternately, the indicator may illuminate to indicate the absence of the key from the docking station. The indicator may change illumination characteristic, such as changing color or brightness, to indicate the key in the docking station. For example, the light 46 may illuminate red to indicate that the key is not docked, and green to indicate that the key is docked. Other indicators may be provided, including a text screen indicating the presence or absence of the key. The indicator may provide the indication as part of a diagnostic of why the machine does not operate.

Figure 6 provides a schematic illustration of a key docking station 50 that has a receiving opening 52 into which a portion of the chuck key 26 is inserted. The opening 52 is provided with a sensor 54 that detects the presence of the chuck key 26 in the opening 52, as indicated by line 56. The sensing may be optical, magnetic, or otherwise, as described above. In a certain embodiment, the sensor 54 is a magnetic switch that operates between switched and un-switched positions depending on the presence or absence of the key in the docking station. The sensor 54 sends a signal as indicated by line 58 to an emergency stop apparatus 60. The emergency stop apparatus 60 may prevent operation of the motor 62 of the lathe when activated. So long as the chuck key 26 is provided in the docking station 50, the sensor signal enables the operation of the motor 62. If the chuck key 26 is absent from the docking station, the emergency stop apparatus 60, or other motor inhibiting apparatus, prevents the motor 62 from being started.

The system may be configured so that the motor 62 may continue operating if the chuck key 26 become dislodged or is removed from the docking station. Alternately, the absence of the key 26 from the docking station, such as the key being removed during machine operation, may result in the motor 62 being stopped while the machine is running.

Additional aspects of certain embodiments of the invention provide that any tool that is used in conjunction with a rotating machine may be provided with a docking station that senses the presence or absence of the tool and affects operation of the machine. For example, a sensor may be provided to sense the presence or absence of a tool in a particular position or location. The sensor may be connected so that the sensed presence of the tool at the position or location may prevent all or certain operations of the machine. The sensor may be connected so that the sensed the absence of the tool from a particular position or location prevents all or certain operations of the machine.

In the illustrated embodiment, the sensor in the docking station senses the presence or absence of the key itself in or at the docking station. Other embodiments are possible and within the scope of the present invention. For example, the sensor may sense an item attached to the key or other tool. A keychain, keyring, or similar device may connect the chuck key to an item, such as a key fob, tile, other tool, or any other item, may be affixed on the keychain and this item is sensed by the docking station when the chuck key is docked at the docking station. For example, an inductive sensor or RFID sensor may sense the presence or absence of the item attached to the key in the proximity of the docking station. It is also possible that the docking station is configured to accept the item on the keychain or keyring into the docking station, and that the item itself may be received in the docking station to enable or disable operation of the machine instead of requiring docking of the chuck key in the docking station. Instead of a keychain, other means and structures and fasteners may be provided to connect the chuck key to the item sensed by the docking station.

An identification item, such as a unique identifier, may be imbedded in or attached to the chuck key, in or attached to the handle of the chuck key, or otherwise formed on or attached to the chuck key, or associated with the chuck key. An RFID tag or other unique identifier may be mounted on or in the chuck key or connected to it or associated with the chuck key. The RFID tag or other unique identifier may correspond to an acceptable unique identifier required for operating the rotating machine or other tool. For example, the unique identification may be identified by the lathe or other tool to enable operation of the lathe or other rotating tool. The sensor may be constructed to sense that the unique chuck key or one of several unique chuck keys or a specific type of chuck key is not left in the chuck in order for the machine to operate.

The chuck key need not be paired to the machine, but in some embodiments the chuck key may be paired with the machine. In particular, a particular chuck key as determined by a unique identifier may be required to operate the machine or to enable operation of the machine. In other embodiments, any chuck key of a correct type may enable operation of the machine when placed into the docking station.

The sensor that detects the chuck key or other item associated with the chuck key may be provided in the docking station or may be provided near the docking station. It is also within the scope of this invention that the sensor may be provided to sense the chuck key on a mat or other surface, on a shelf, or at a storage position. The chuck key need not be inserted into a docking station or other receiving opening to be sensed. Proximity sensing of the chuck key may be provided to sense the presence or absence of the chuck key or other tool in the proximity of the sensor and to enable or disable the operation of the machine depending on the sensed presence or absence of a sensed presence of the chuck key or an associated item.

The docking station for the chuck key or other tool need not be on the housing of the machine. The docking station may be provided at a separate location from the machine, such as at a convenient location in the workshop, but remote from the machine housing. The docking station may sense the presence or absence of the chuck key or other tool or an associated item and may provide control signals to the machine via wired or wireless communication. For example, a tool storage location for storing the shaping tools used by the user of the lathe or other machine may be provided with a chuck key sensing or docking station to prevent operation of the lathe unless the chuck key is returned to the sensing or docking station at the tool storage location.

Thus, there is shown and described a chuck key holder for a metal lathe, wood lathe, drill press, drill, router, or other machine that prevents operation of the machine, for example rotational operation of the chuck, unless the chuck key is present in the chuck key holder or docking station. Loss of or damage to the chuck key as a result of starting the machine while the chuck key is in the chuck is prevented. The chuck key is prevented from being flung from the machine as the machine is started.

A lathe or other rotating machine includes a chuck for holding a work piece or tool. The chuck is operated between engaging and disengaging positions by rotating a chuck key inserted into a key receiving opening in the chuck. A chuck key docking station on the machine includes a sensor to sense the presence or absence of the chuck key at the docking station. The sensor is connected to prevent operation of the machine at speed if the chuck key is not in the docking station.

Although other modifications and changes may be suggested by those skilled in the art, it is the intention of the inventors to embody within the patent warranted hereon all changes and modifications as reasonably and properly come within the scope of their contribution to the art.

## Claims

1. A rotating machine, comprising:
a motor that is operable for rotational motion;
a chuck connected for rotation by the motor, the chuck including grasping elements that are movable relative to a rotational center of the chuck, the chuck defining a key receiving opening;
a chuck key having a portion that selectively engages into the key receiving opening, the chuck key being operable to move the grasping elements of the chuck;
a chuck key docking station remote from the chuck; and
a sensor disposed and operable to determine a presence of the chuck key in or at the chuck key docking station, the sensor being connected to prevent rotational operation of the chuck by the motor unless the sensor determines that the chuck key is present in or at the chuck key docking station.

2. A rotating machine as claimed in claim 1, further comprising:
a housing enclosing the motor, the chuck key docking station being mounted on the housing.

3. A rotating machine as claimed in claim 1 or claim 2, wherein the sensor is selected from the group of sensors including a magnetic sensor, an optical sensor, an electrical sensor, a wireless sensor, an RFID (radio frequency identification) sensor, and a contact sensor.

4. A rotating machine as claimed in claim 3, wherein the sensor is an RFID sensor and further comprising:
an RFID tag in or on the chuck key, wherein the RFID tag uniquely identifies the chuck key, the sensor being operable to enable operation of the rotating machine only when the uniquely identified chuck key is sensed in the chuck key docking station.

5. A rotating machine as claimed in claim 1 or of any of claims 2 to 4, wherein the rotating machine is a lathe and the chuck is a lathe chuck.

6. A rotating machine as claimed in claim 1 or of any of claims 2 to 5, further comprising:
an emergency stop apparatus operable to inhibit or stop operation of the rotating machine, the sensor being connected to the emergency stop apparatus to disable operation of the rotating machine unless the sensor senses the chuck key is in or at the chuck key docking station.

7. A rotating machine as claimed in claim 1 or of any of claims 2 to 6, wherein the chuck key docking station is shaped to receive a portion of the chuck key in an opening; and
wherein the sensor is mounted and operable to sense the portion of the chuck key in the opening of the chuck key docking station.

8. A rotating machine as claimed in claim 7, wherein the chuck key is a T-shaped chuck key having a cross-bar and a vertical bar connected to the cross-bar and having a key portion at an opposite end; and
wherein the docking station is shaped to receive a vertical bar of the T-shaped chuck key.

9. A method for operating a rotating machine, comprising:
receiving a chuck key in a key receiving opening of a chuck for operation of the chuck between an engaged position and a disengaged position;
detecting the chuck key at a chuck key docking station which is remote from the chuck of the rotating machine;
enabling operation of the rotating machine to rotate the chuck at operating speed if the chuck key is detected at the chuck key docking station; and
disabling operation of the rotating machine to rotate the chuck at operating speed if the chuck key is not detected at the chuck key docking station.

10. A method as claimed in claim 9, wherein the disabling includes communicating a lack of detection of the chuck key at the chuck key docking station to a emergency stop apparatus of the rotating machine.

11. A method as claimed in claim 9 or claim 10, wherein the detecting step includes detecting a unique identification of the chuck key at the chuck key docking station, and
wherein the enabling step includes enabling the operation of the rotating machine only if the unique identification of the chuck key corresponds an acceptable unique identification for the rotating machine.
